# EUROPEAN PATENT APPLICATION

(11) **EP 4 727 145 A1**
(43) Date of publication of application: **15.04.2026**
(21) Application number: 24218140.2
(22) Date of filing: 06.12.2024
(51) Int. Cl.: H04N 23/55, H04N 23/50, H04N 23/51, H04N 23/54, H04N 23/57, G03B 17/02, G03B 17/12

(54) **CAMERA ASSEMBLY**

(30) Priority: 12.10.2024 CN 202411425383; 12.10.2024 CN 202422473874 U; 01.11.2024 CN 202422685119 U
(71) Applicant: Sharetronic Data Technology Co., Ltd., Shenzhen, Guangdong 518000 (CN)
(72) Inventor: GENG, Kangming, Shenzhen city, Guangdong 518000 (CN); YI, Zhou, Shenzhen city, Guangdong 518000 (CN); QU, Zhaotian, Shenzhen city, Guangdong 518000 (CN); LIU, Jianfei, Shenzhen city, Guangdong 518000 (CN); CHEN, Chunyun, Shenzhen city, Guangdong 518000 (CN)
(74) Representative: Santarelli

(57) **Abstract**

The present disclosure a camera assembly. The camera assembly comprises an imaging module and a first connecting member. The first connecting member is connected between the imaging module and a first side of the light-transmitting substrate. The first connecting member defines a first light-transmitting hole and includes a light shielding portion. The first light-transmitting hole is corresponded to a camera lens of the imaging module. The light shielding portion is set around the first light-transmitting hole and protruded from a peripheral surface of the imaging module. The imaging module is configured to image a scene on a second side of the light-transmitting substrate through the first light-transmitting hole. A side of the imaging module back from the first connecting member is a third side. The light shielding portion is configured to block light rays from the third side, so as to avoid a problem of imaging glare.

## Description

### CROSS-REFERENCE TO RELATED APPLICATIONS

This application claims priority to and the benefits of Chinese Application Patent Application No. 2024224738740, filed on October 12, 2024, Chinese Application Patent Application No. 2024114253837, filed on October 12, 2024, and Chinese Application Patent Application No. 2024226851199, filed on November 2, and the entire disclosure of which are hereby incorporated by reference.

### TECHNICAL FIELD

The present disclosure relates to technical fields of cameras, and in particular relates to a camera assembly that prevents glare.

### BACKGROUND

In the prior art, the camera is adhered directly to one side of a glass using double-sided tape, and the double-sided tape is generally the same size as the camera. The camera is used to image a scene on the other side of the glass. However, when the glass is double layers glass or multi-layers glass, a glare ring will appear in the imaging content of the camera, affecting the imaging quality.

### SUMMARY

In view of this, the present disclosure provides a camera assembly, to solve at least one of above technical problems of the prior art.

In order to solve the above technical problems, the technical solutions of the present disclosure are:
The present disclosure provides a camera assembly, configured to be mounted on a light-transmitting substrate. The light-transmitting substrate includes a first side and a second side opposite to the first side. The camera assembly includes an imaging module and a first connecting member. The first connecting member is connected between the imaging module and the first side of the light-transmitting substrate. The first connecting member defines a first light-transmitting hole and includes a light shielding portion. The first light-transmitting hole is located corresponding to a camera lens of the imaging module. The light shielding portion is set around the first light-transmitting hole. The light shielding portion is protruded from a peripheral surface of the imaging module along a radial direction of the imaging module. The imaging module is configured to image a scene on the second side of the light-transmitting substrate through the first light-transmitting hole. A side of the imaging module back from the first connecting member is a third side. The light shielding portion is configured to block light rays entering the light-transmitting substrate from the third side and then entering the imaging module after reflection from the light-transmitting substrate.

Compared to the prior art, the beneficial effects of the present disclosure are:
In the present disclosure, the first connecting member defines the first light-transmitting hole, and the first light-transmitting hole is located corresponding to the camera lens of the imaging module, the imaging module is configured to image a scene on the second side of the light-transmitting substrate through the first light-transmitting hole, so that the first connecting member except the first light-transmitting hole does not interfere with light rays from the front of the imaging module entering the imaging module for imaging. Furthermore, the first connecting member includes the light shielding portion, the light shielding portion is set around the first light-transmitting hole, and the light shielding portion is protruded from the peripheral surface of the imaging module along the radial direction, so that the light shielding portion can block light rays from a rear of the imaging module from entering the imaging module, thereby avoiding the problem of imaging glare caused by light rays from the rear of the imaging module entering the imaging module. The front of the imaging module refers to a direction in which the camera lens of the imaging module is facing the scene to be photographed (the scene on the second side of the light-transmitting substrate), and the rear of the imaging module refers to a direction opposite to the front of the imaging module.

### BRIEF DESCRIPTION OF THE ACCOMPANYING DRAWINGS

To describe the technology solutions in the embodiments of the present disclosure more clearly, the following briefly introduces the accompanying drawings required for describing the embodiments. Obviously, the accompanying drawings in the following description show merely at least one embodiment of the present disclosure, those of ordinary skilled in the art may also obtain other drawings based on these drawings without any creative efforts.
FIG. 1 illustrates a schematic view of a three-dimensional structure of a camera assembly mounted on a light-transmitting substrate in accordance with one embodiment of the present disclosure;
FIG. 2 illustrates an exploded view of FIG. 1;
FIG. 3 illustrates a main view, a rear view and a cross-sectional view of the first connecting member in accordance with one embodiment of the present disclosure, in which (a) in FIG. 3 is the rear view, (b) in FIG. 3 is the cross-sectional view of (c) in FIG. 3 at 3b-3b, and (c) in FIG. 3 is the main view;
FIG. 4 illustrates a schematic view of an optical path in two cases of the first connecting member blocking the incident light rays behind the imaging module and not blocking the incident light rays behind the imaging module, and a schematic view of a calculation of an inner aperture diameter of the first light-transmitting hole in accordance with one embodiment of the present disclosure;
FIG. 5 illustrates a schematic view of a calculation of a maximum outer diameter of the light shielding portion when the light shielding portion blocks the incident light rays behind the imaging module in accordance with one embodiment of the present disclosure;
FIG. 6 illustrates a schematic view of determining the length and width of the light shielding portion based on the maximum outer diameter of the light shielding portion in accordance with one embodiment of the present disclosure;
FIG. 7 illustrates a schematic view of a further decomposition of FIG. 1 in accordance with one embodiment of the present disclosure;
FIG. 8 illustrates a schematic view of a three-dimensional structure in which a second connecting member is mounted to the imaging module in accordance with one embodiment of the present disclosure;
FIG. 9 illustrates a main view, a rear view and a cross-sectional view of the second connecting member in accordance with one embodiment of the present disclosure, in which (a) in FIG. 9 is the rear view, (b) in FIG. 9 is the cross-sectional view of (c) in FIG. 9 at 9b-9b, and (c) in FIG. 9 is the main view.
FIG. 10 illustrates a schematic view of a three-dimensional structure of a camera assembly 100 mounted on a light-transmitting substrate in accordance with another embodiment of the present disclosure.
FIG. 11 illustrates an exploded view of FIG. 10 in accordance with another embodiment of the present disclosure.
FIG. 12 illustrates a schematic view of a structure of the camera assembly of FIG. 11.
FIG. 13 illustrates an further exploded view of FIG. 10 in accordance with another embodiment of the present disclosure.

The description of reference signs:
Camera assembly-100;
Imaging module-101; third side-1011; camera lens 1012; housing 1013; end cover 1014; third light-transmitting hole 1015; recess 1016; first housing portion 1017; second housing portion 1018;
First connecting member-102; first light-transmitting hole-1021; light shielding portion-1020; first extending portion-1022; first surface-1023; magnetic portion 1023a; second surface-1024;
Second connecting member-103; second light-transmitting hole-1031; second protruding portion-1032; third surface-1033; fourth surface-1034;
Magnetic member 104;
Fourth connecting member 105; fourth light-transmitting hole 1051; wraparound portion 1052; protruding portion 1053;
Light-transmitting substrate-200; first side-201; second side-202; first light-transmitting substrate-203; second light-transmitting substrate 204.

### DETAILED DESCRIPTION OF ILLUSTRATED EMBODIMENTS

Embodiments of the present disclosure are described in detail below. Examples of the embodiments are shown in the accompanying drawings. The same or similar labeling throughout denotes the same or similar elements or elements having the same or similar functions. The embodiments described below by reference to the accompanying drawings are exemplary and are intended to be configured to explain the present disclosure and are not to be construed as limiting the present disclosure.

Furthermore, the terms "first" and "second" are used for descriptive purposes only and are not to be understood as indicating or implying relative importance or implicitly specifying the number of technical features indicated. Therefore, a feature defined with "first" or "second" may include one or more such features, either explicitly or implicitly. In the description of the present disclosure, "more than one" means two or more, unless otherwise expressly and specifically limited.

In the present disclosure, unless otherwise expressly specified and limited, the terms "connected", "fixed", and so on are to be understood broadly, e.g., they may be fixedly connected, removablely connected, or integrally connected; they may be mechanically connected or electrically connected; they may be directly connected or indirectly connected through an intermediate medium; they may be interconnected within two elements or an interactive relationship between two elements. For those of ordinary skill in the art, the specific meaning of the above terms in the present disclosure may be understood on a case-by-case basis.

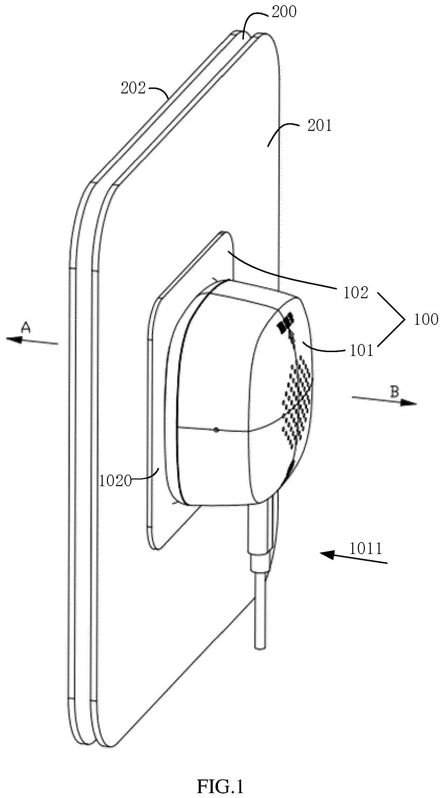

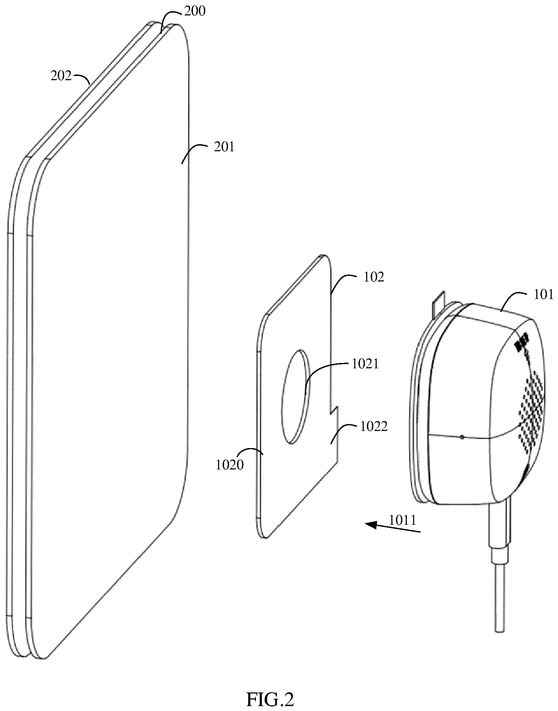

Referring to FIGs. 1 and 2, FIG. 1 illustrates a schematic view of a three-dimensional structure of a camera assembly 100 mounted on a light-transmitting substrate 200 in accordance with one embodiment of the present disclosure; FIG. 2 illustrates an exploded view of FIG. 1. The light-transmitting substrate 200 can include a first side 201 and a second side 202 opposite to the first side 201. The camera assembly 100 can include an imaging module 101 and a first connecting member 102. The first connecting member 102 is connected between the imaging module 101 and the first side 201 of the light-transmitting substrate 200. The first connecting member 102 can define a first light-transmitting hole 1021 and can include a light shielding portion 1020. The first light-transmitting hole 1021 is located corresponding to a camera lens of the imaging module 101. The light shielding portion 1020 is set around the first light-transmitting hole 1021. The light shielding portion 1020 is protruded from a peripheral surface of the imaging module 101 along a radial direction of the imaging module 101. The imaging module 101 is configured to image a scene on the second side 202 of the light-transmitting substrate 200 through the first light-transmitting hole 1021. A side of the imaging module 101 back from the first connecting member 102 is a third side 1011. The light shielding portion 1020 is configured to block light rays entering the light-transmitting substrate 200 from the third side 1011 and then entering the imaging module 101 after reflection from the light-transmitting substrate 200.

Therefore, in the present disclosure, the first connecting member 102 defines the first light-transmitting hole 1021, and the first light-transmitting hole 1021 is located corresponding to the camera lens of the imaging module 101, the imaging module 101 is configured to image a scene on the second side 202 of the light-transmitting substrate 200 through the first light-transmitting hole 1021, so that the first connecting member 102 except the first light-transmitting hole 1021 does not interfere with light rays from the front of the imaging module 101 entering the imaging module 101 for imaging, Furthermore, the first connecting member 102 includes the light shielding portion 1020, the light shielding portion 1020 is set around the first light-transmitting hole 1021, and the light shielding portion 1020 is protruded from the peripheral surface of the imaging module 101 along the radial direction of the imaging module 101, so that the light shielding portion 1020 can block light rays from a rear of the imaging module 101 from entering the imaging module 101, thereby avoiding the problem of imaging glare caused by light rays from the rear of the imaging module 101 entering the imaging module 101. The front of the imaging module 101 refers to a direction in which the camera lens of the imaging module 101 is facing the scene to be photographed (the scene on the second side 202 of the light-transmitting substrate 200), and the rear of the imaging module 101 refers to a direction opposite to the front of the imaging module 101.

In at least one embodiment, the imaging module 101 is an electronic device, which can convert light signals into electric signals or digital signals, thereby generating image data. The imaging module 101 generally includes a camera lens, a sensor, image processor, and output port, and so on. The camera lens is configured to focus light rays onto the sensor. The sensor is configured to convert light signals into electric signals or digital signals to generate image data. The image processor processes the image data from the sensor, and adjusts the quality of the image data and applies an image enhancement function to the image data, and the output port transmits the processed image data to a display screen, a storage device, or other devices. The imaging module 101 can be widely used in a variety of application scenarios, including: photography, videography, medical imaging, machine vision, security, automotive electronics, unmanned aerial vehicles, medical devices, and the like.

In at least one embodiment, the front of the imaging module 101 refers to a direction in which the camera lens of the imaging module 101 is facing the scene to be photographed, such as the direction shown by the arrow A in FIG. 1, and the rear of the imaging module 101 refers to a direction opposite to the front of the imaging module 101, such as the direction shown by the arrow B in FIG. 1.

In at least one embodiment, the image module 101 has a square, rectangular, circular, or polygonal shape, etc. In this embodiment, the imaging module 101 has a square shape.

In at least one embodiment, the light-transmitting substrate 200 is glass; in other embodiments, the light-transmitting substrate 200 may be polycarbonate (PC), polymethylmethacrylate (PMMA), polyethylene terephthalate (PET), polystyrene (PS), polytetrafluoroethylene (PTFE), fluorinated ethylene propylene (FEP), polyimide (PI), sapphire, quartz, and the like.

In at least one embodiment, the light-transmitting substrate 200 is a double layers of glass. In other embodiments, the light-transmitting substrate 200 is a single layer of glass or a multi-layers of glass, without limitation herein.

In at least one embodiment, the first connecting member 102 except the first light-transmitting hole 1021 is black or other colors with light-transmitting rate less than preset threshold. In this embodiment, the first connecting member 102 except the first light-transmitting hole 1021 is black.

In at least one embodiment, the first light-transmitting hole 1021 is a circular hole. In other embodiments, the first light-transmitting hole 1021 may be a square hole or a polygonal hole, etc, without limited herein. When the first light-transmitting hole 1021 is a square hole or a polygonal hole, etc, the inner aperture diameter of the first light-transmitting hole 1021 is the diameter of an inscribed circle of the first light-transmitting hole 1021.

In at least one embodiment, the first light-transmitting hole 1021 is a through-hole defined at a center or other position of the first connecting member 102. In other embodiments, the first light-transmitting hole 1021 is a blind hole defined at a center or other position of the first connecting member 102. It will be understood that the bottom wall of the blind hole may be made of transparent materials. Thus, the first connecting member 102 is made of at least two materials, i.e. a transparent materials for making the center blind hole and opaque materials for making the light shielding portion 1020 in the peripheral region. In some further embodiments, the first light-transmitting hole 1021 may be a light-transmitting area flush with the surface of the light shielding portion 1020, without being limited herein.

In some further embodiments, the light shielding portion 1020 is used for shading light. The first connecting member 102 can further include a connecting portion. The connecting portion surrounds the light-transmitting hole 1021. The light shielding portion 1020 surrounds and connects the connecting portion. That is, the light shielding portion 1020 is only a part of the first connecting member 102 protruding from the peripheral surface of the imaging module 101 along the radial direction of the imaging module 101.

In at least one embodiments, the radial direction of the imaging module 101 refers to a direction that radiates in a dispersion-like direction in all directions with the center of the imaging module 101 as a circular point.

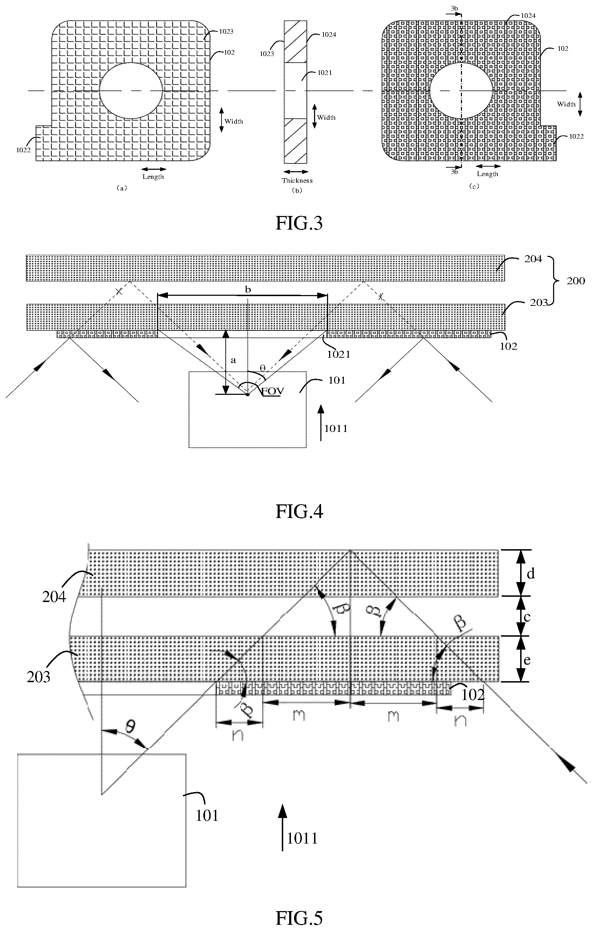

FIG. 3 illustrates a main view, a rear view and a cross-sectional view of the first connecting member 102 in accordance with one embodiment of the present disclosure, in which (a) in FIG. 3 is the rear view, (b) in FIG. 3 is the cross-sectional view of (c) in FIG. 3 at 3b-3b, and (c) in FIG. 3 is the main view. The first connecting member 102 is in a form of flat plate. The first connecting member 102 can include a first surface 1023 and a second surface 1024 opposite to the first surface 1023. The first surface 1023 is connected to the light-transmitting substrate 200, and the second surface 1024 is connected to the imaging module 101. A way of connecting the first surface 1023 to the light-transmitting substrate 200 can be, but is not limited to, by adhesive layer adhesion, or without adhesive layer, directly by negative pressure adsorption, or magnetic adsorption, and the like. A way of connecting the second surface 1024 of the first connecting member 102 to the imaging module 101can be, but is not limited to, by adhesive layer adhesion, magnetic connection, threaded connection, snap connection, negative pressure adsorption connection, and the like, without limitation herein.

In at least one embodiment, a ratio of a maximum outer diameter of the light shielding portion 1020 to an inner aperture diameter of the first light-transmitting hole 1021 ranges from 2:1 to 30:1. When the light shielding portion 1020 is of a non-circular shape such as a square, a polygon, etc., the maximum outer diameter refers to a length of a diagonal of the light shielding portion 1020. When the light shielding portion 1020 is a circular shape, the maximum outer diameter refers to the diameter of the light shielding portion 1020. It will be understood that the maximum outer diameter of the light shielding portion 1020 does not refer to the maximum achievable outer diameter value of the light shielding portion 1020, but rather that there may be more than one outer diameter values of the light shielding portion 1020 when the light shielding portion 1020 is in a particular shape, for example, when the light shielding portion 1020 is in a rectangle shape with an aspect ratio of 16:9, the outer diameters of the light shielding portion 1020 are different in different positions, and the maximum outer diameter of the light shielding portion 1020 refers to a largest outer diameter among that plurality of outer diameter values. The inner aperture diameter of the first light-transmitting hole 1021 is generally a diameter of the first light-transmitting hole 1021. When the first light-transmitting hole 1021 is a non-circular hole, the inner aperture diameter of the first light-transmitting hole 1021 is a diameter of an inscribed circle of the first light-transmitting hole 1021.

In at least one embodiment, a ratio of the inner aperture diameter of the first light-transmitting hole 1021 and a diameter of a head of the camera lens of the imaging module 101 ranges from 1:1-3:1. The imaging module 101 can include a plurality of camera lens arranged along a light axis of the imaging module 101. The diameter of the head of the camera lens of the imaging module 101 refers to a maximum diameter of the camera lens that is closest to the incident side of the imaging module 101, and the camera lens of the plurality of camera lenses that is closest to the incident side of the imaging module 101 is generally also the camera lens of the plurality of camera lenses which has a largest diameter.

Therefore, by the above limitation of the ratio range, it can be ensured that, when the imaging module 101 is mounted to the first connecting member 102, the diameter of the first light-transmitting hole 1021 is sufficiently large so that the imaging module 101 is able to capture its entire field-of-view area through the first light-transmitting hole 1021 without being obscured by the first connecting member 102, and the imaging module 101 can be avoided from being cropped or distorted in its imaging.

In at least one embodiment, the inner aperture diameter of the first light-transmitting hole 1021 is greater than or equal to a diameter of a largest area of the imaging module 101 that can be imaged on a surface of the first connecting member 102 that is back from the imaging module 101.

Therefore, when the imaging module 101 is mounted to the first connecting member 102, the diameter of the first light-transmitting hole 1021 is sufficiently large so that the imaging module 101 is able to capture its entire field-of-view area through the first light-transmitting hole 1021 without being obstructed by the first connecting member 102, which can prevent the imaging of the imaging module 101 from being cropped or distorted.

In at least one embodiment, as shown in FIG. 4, the inner aperture diameter of the first light-transmitting hole 1021 is determined based on at least the field of view (FOV) of the imaging module 101 and a distance a between a light cone point C of the imaging module 101 and a surface of the first connecting member 102 back from the imaging module 101.

The light cone point C is generally referred to as a view point of the imaging module 101, the view point of the imaging module 101 varies in different field of view situations, and the present disclosure takes a position of the view point of the imaging module 101 in the case of the maximum field of view as the light cone point C.

In detail, as shown in FIG. 4, the inner aperture diameter of the first light-transmitting hole 1021 is determined at least the FOV of the imaging module 101, a distance a between the light cone point C of the imaging module 101 and a surface of the first connecting member 102 back from the imaging module 101, and a first formula, where the first formula is b≥2*a*tanθ. Where b refers to an inner aperture diameter of the first light-transmitting hole 1021, θ=FOV/2, the diameter of the largest area of the imaging module 101 that can be imaged on a surface of the first connecting member 102 that is back from the imaging module 101 is 2*a*tanθ.

Therefore, in the present disclosure, according to the sizes of the imaging module 101 and first connecting member 102, a distance a between the light cone point C and a surface of the first connecting member 102 back from the imaging module 101 is calculated, 1/2 of the field of view FOV of the imaging module 101 is taken as θ. Based on the trigonometric function, the inner aperture limit value b of the first connecting member 102 is calculated, and then superimposed on the assembly process to obtain a desired inner aperture data of the first light-transmitting hole 1021, which can ensure that the size of the first light-transmitting hole 1021 will not affect the imaging quality of the imaging module 101.

In at least one embodiment, as limited above, the light shielding portion 1020 is protruded from the peripheral surface of the imaging module 101 along the radial direction of the imaging module 101, thus, a ring of a projection of the peripheral surface of the imaging module 101 on the light-transmitting substrate 200 is located within a projection of the light shielding portion 1020 of the first connecting member 102 on the light-transmitting substrate 200, or a ring of a projection of the peripheral surface of the imaging module 101 on the light-transmitting substrate 200 coincides with an inner edge of a projection of the light shielding portion 1020 of the first connecting member 102 on the light-transmitting substrate 200.

Therefore, when the imaging module 101 is mounted on the light-transmitting substrate 200 through the first connecting member 102, the entire circumference of the first connecting member 102 is protruded from the circumference of the imaging module 101, serving to block the light rays entering the light-transmitting substrate 200 from the third side 1011 and then entering the imaging module 101 after being reflected by the light-transmitting substrate 200.

It is to be noted that the maximum outer diameter of the light shielding portion 1020 determines the ability of the light shielding portion 1020 to block the light rays entering the light-transmitting substrate 200 from the third side 1011 and then entering the imaging module 101 after being reflected by the light-transmitting substrate 200. The larger the maximum outer diameter of the light shielding portion 1020, the greater the ability of the light shielding portion 1020 to block light rays entering the light-transmitting substrate 200 from the third side 1011 and then entering the imaging module 101 after being reflected by the light-transmitting substrate 200, and conversely, when the maximum outer diameter of the light shielding portion 1020 is reduced, the ability of the light shielding portion 1020 to block the light rays from the third side 1011 entering the light-transmitting substrate 200 and then entering the imaging module 101 after being reflected by the light-transmitting substrate 200 is relatively reduced. However, if the maximum outer diameter of the light shielding portion 1020 is designed to be too large, although it can block all the light rays entering the light-transmitting substrate 200 from the third side 1011 and then entering the imaging module 101 after being reflected by the light-transmitting substrate 200, it affects the aesthetics and blocks more light rays from the light-transmitting substrate 200, which affects the light-gathering capacity of the light-transmitting substrate 200 itself. It has been shown that when the light shielding portion 1020 blocks most of the light rays entering the light-transmitting substrate 200 from the third side 1011 and then entering the imaging module 101 after being reflected by the light-transmitting substrate 200, even though there is still a small amount of light rays entering the light-transmitting substrate 200 from the third side 1011 and then entering the imaging module 101 after being reflected by the light-transmitting substrate 200. However, no flare is formed within the imaging of the imaging module 101. Therefore, the outer diameter of the light shielding portion 1020 is designed to block a predetermined amount of light rays entering the imaging module 101 from the third side 1011 into the light-transmitting substrate 200 and then entering the imaging module 101 after being reflected by the light-transmitting substrate 200.

In at least one embodiment, the maximum outer diameter of the light shielding portion 1020 can be determined at least according to the field of view of the imaging module 101.

Therefore, in the present disclosure, the maximum outer diameter of the light shielding portion 1020 can be adjusted according to the size of field of view of each imaging module 101, so that the imaging module 101 with different field of view can have the light shielding portion 1020 of the corresponding size adapted to them.

In at least one embodiment, as shown in FIG. 4, the light-transmitting substrate 200 can include at least two layers of light-transmitting substrates, and there is a gap between the at least two layers of light-transmitting substrates. In this embodiment, the light-transmitting substrate 200 can include two layers of light-transmitting substrates, and the two layers of light-transmitting substrates can include a first light-transmitting substrate 203 and a second light-transmitting substrate 204, where the first light-transmitting substrate 203 is connected to the first connecting member 102. The second light-transmitting substrate 204 is located on one side of the first light-transmitting substrate 203 away from the first connecting member 102. There is a gap between the first light-transmitting substrate 203 and the second light-transmitting substrate 204. It should be noted that if there is no light shielding portion 1020 to block the light rays from the third side 1011, the light rays from the third side 1011 will first pass through the first light-transmitting substrate 203 and be reflected on the surface of the second light-transmitting substrate 204 close to the first light-transmitting substrate 203, and then passes through the first light-transmitting substrate 203, and finally enters into the imaging module 101, with a specific light path is shown as a dashed line light path in FIG. 4. Conversely, if the light rays from the third side 1011 is blocked by the light shielding portion 1020, the light rays from the third side 1011 will be reflected on the surface of the light shielding portion 1020, and will not enter into the imaging module 101, as shown in a solid line light path in FIG. 4. Thus, the maximum outer diameter of the light shielding portion 1020 can be determined at least on the basis of the field of view FOV of the imaging module 101, the thickness of the first light-transmitting substrate 203, the thickness of the second light-transmitting substrate 204 and the width of the gap between the first light-transmitting substrate 203 and the second light-transmitting substrate 204.

In a specific embodiment, as shown in FIG. 5, the maximum outer diameter of the light shielding portion 1020 is calculated based on the ability of the light shielding portion 1020 to block light rays from entering within the field of view of the imaging module 101. Specifically, the maximum outer diameter of the light shielding portion 1020 may be determined based on the field of view FOV of the imaging module 101, the thickness of the first light-transmitting substrate 203, the thickness of the second light-transmitting substrate 204, and the width of the gap between the first light-transmitting substrate 203 and the second light-transmitting substrate 204, as well as a second formula. The second formula is S=2(c+d+e)/tanβ, where S is the maximum outer diameter of the light shielding portion 1020, e is the thickness of the first light-transmitting substrate 203, d is the thickness of the second light-transmitting substrate 204, c is the width of the gap between the first light-transmitting substrate 203 and the second light-transmitting substrate 204, and β=90-θ, and θ=FOV/2. The second formula is performed as follows: tanβ=(c+d)/m, wherein the meaning of m is shown in FIG. 5. Meanwhile, tanβ=e/n, where the meaning of n is shown in Fig. 5. Thus, it can be calculated that m=(c+d)/tanβ, n=e/tanβ, β=90-θ, and S=2m+2n=2(c+d)/tanβ+2e/tanβ=2(c+d+e)/tanβ. It will be understood that if it is desired that the light shielding portion 1020 be capable of blocking more light rays from entering the imaging module 101, then the size of the maximum outer diameter S of the light shielding portion 1020 needs to be increased accordingly. For example, if the light shielding portion 1020 is required to block light rays from entering the imaging module 101 within an angular range of field of view plus 20 degrees, then β=90-(FOV+20°)/2, and thus β decreases, and accordingly, the maximum outer diameter S of the light shielding portion 1020 increases.

It is to be noted that what is calculated above is the maximum outer diameter S of the light shielding portion 1020, and in practice, for the sake of aesthetics, the shape of the light shielding portion 1020 needs to be adapted to the shape of the imaging module 101, e.g., if the imaging module 101 is square, then the light shielding portion 1020 is an inscribed rectangle within a circle of the maximum outer diameter S, without limitation herein.

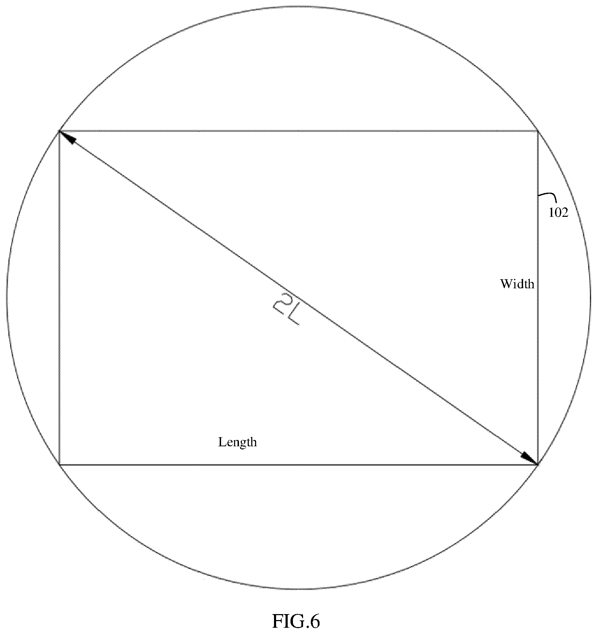

In at least one embodiment, the light shielding portion 1020 is an inscribed rectangle or an inscribed polygon of a circle having the maximum outer diameter S of the light shielding portion 1020 as a diameter. As shown in FIG. 6, the light shielding portion 1020 is an inscribed rectangle with an aspect ratio of 16:9 of a circle having the maximum outer diameter S as a diameter. It will be understood that, depending on the shape of the imaging module 101, the light shielding portion 1020 may also be an inscribed rectangle or an inscribed polygon of other aspect ratios, without limitation herein.

In at least one embodiment, referring to FIG. 3 again, a first extending portion 1022 is provided at an outer edge of the light shielding portion 1020. The first extending portion 1022 is located tangentially to the light shielding portion 1020.

Thereby, the first extending portion 1022 can be provided as a manual tearing bit, through which the first connecting member 102 can be conveniently connected between the imaging module 101 and the first light-transmitting substrate 203.

In some embodiments, the first extending portion 1022 may be, but is not limited to, rectangular shaped, sharp-pointed or other shapes, and is not limited herein.

In some embodiments, when the imaging module 101 is externally square in shape, the light shielding portion 1020 is an inscribed rectangle of a circle having the maximum outer diameter S as a diameter, and the light shielding portion 1020 has four top corners on the outer edge, where the first extending portion 1022 is provided at one of the top corners, and chamfered corners are provided at the other three top corners, respectively.

Thereby, processing of the first extending portion 1022 can be facilitated.

In some specific embodiments, the light shielding portion 1020 is an inscribed rectangle of a circle having the maximum outer diameter S as a diameter, the first connecting member 102 has a length and width of 80±5 mm, the first light-transmitting hole 1021 has an inner aperture diameter of 32±5 mm, the first extending portion 1022 has a width of 20±5 mm and the first extending portion 1022 has a length of 8±5 mm. The first connecting member 102 has a chamfer of 10±5 mm. The first connecting member 102 has a thickness of 1.5 ± 0.5 mm.

Correspondingly, the imaging module 101 has a length and width of 64±5 mm.

It will be understood that the above are only examples, and adjustments may be made as needed in actual applications, and are not limited herein.

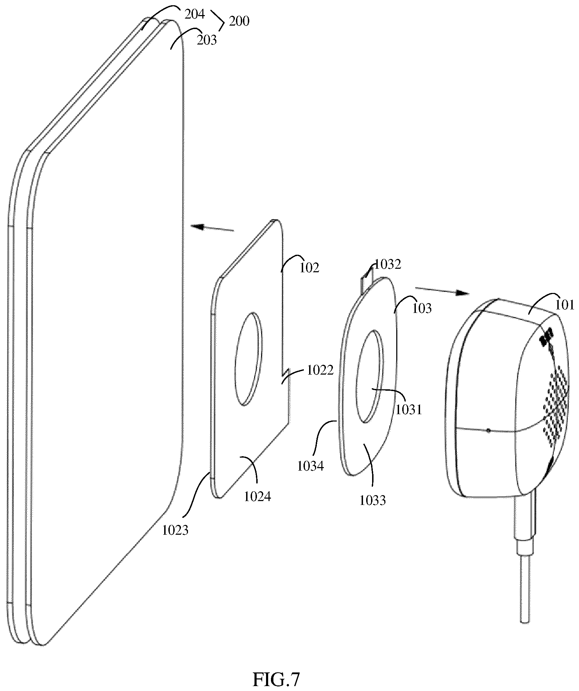

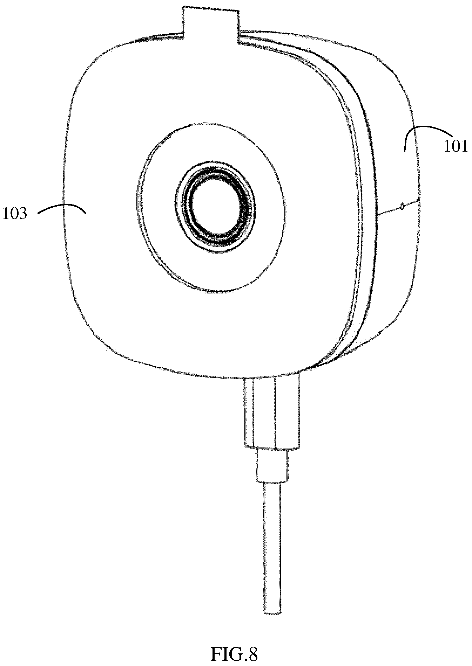

Specially, referring to FIGs. 7 and 8, the camera assembly 100 can further include a second connecting member 103, the second connecting member 103 can include a third surface 1033 and a fourth surface 1034 opposite to the third surface 1033. The first surface 1023 of the first connecting member 102 is connected to the first light-transmitting substrate 203, the third surface 1033 of the second connecting member 103 is connected to the imaging module 101, and the first connecting member 102 and the second connecting member 103 are removably connected on sides towards to each other, i.e. the second surface 1024 of the first connecting member 102 and the fourth surface 1034 of the second connecting member 103 are removably connected.

Therefore, when the first connecting member 102 is connected to the first light-transmitting substrate 203, and the second connecting member 102 is connected to one side of the imaging module 101 towards the first connecting member 102, and the first connecting member 102 is removably connected to the second connecting member 103, the relative position relationship between the first connecting member 102 and the second connecting member 103 can be adjusted as needed, without having to adjust the mounting position of the first connecting member 102 on the first light-transmitting substrate 203 and the mounting position of the second connecting member 103 on the imaging module 101, so that it is convenient for the user to adjust the mounting position of the imaging module 101 with respect to the first connecting member 102, for user-friendly operation.

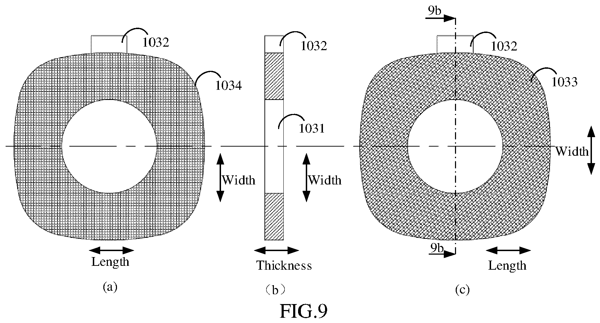

In some embodiments, the first connecting member 102 is a suede velcro. As shown in FIG. 3, the first surface 1023 is provided with an adhesive layer for attachment to the first light-transmitting substrate 203; the second surface 1024 is a suede fabric. The second connecting member 103 is a hook velcro. As shown in FIG. 9, the third surface 1033 is provided with an adhesive layer for attachment to the imaging module 101 and the fourth surface 1034 is provided with hooks. Thus, the second surface 1024 can be removably connected to the fourth surface 1034. Depending on the requirements, the first connecting member 102 and the second connecting member 103 can be connected to each other or separated from each other.

In other embodiments, the connection between the third surface 1033 and the imaging module 101 is not limited to an adhesive connection, but may also be a magnetic connection, a threaded connection, a snap connection, a negative pressure adsorption connection, and the like, without limitation herein.

In at least one embodiment, referring to FIG. 9, FIG. 9 illustrates a main view, a rear view and a cross-sectional view of the second connecting member 103 in accordance with one embodiment of the present disclosure, in which (a) in FIG. 9 is the rear view, (b) in FIG. 9 is the cross-sectional view of (c) in FIG. 9 at 9b-9b, and (c) in FIG. 9 is the main view. The second connecting member 103 is in a form of flat plate. The second connecting member 103 can define a second light-transmitting hole 1031. The imaging module 101 can image a scene on the second side 202 of the light-transmitting substrate 200 through the second light-transmitting hole 1031 and the first light-transmitting hole 1021. An inner aperture diameter of the second connecting member 103 is greater or equal to the inner aperture diameter of the first light-transmitting hole 1021. When installed, the centers of the first connecting member 102 and the second connecting member 103 coincide within a margin of error.

Therefore, the second light-transmitting hole 1031 will not affect the imaging efficiency of the imaging effect.

In at least one embodiment, the second light-transmitting hole 1031 is a through-hole defined at a center or other position of the second connecting member 103.

In at least one embodiment, the second light-transmitting hole 1031 is a circular hole. In other embodiments, the second light-transmitting hole 1031 may be a square hole or a polygonal hole, etc, without limited herein. When the second light-transmitting hole 1031 is a square hole or a polygonal hole, etc, the inner aperture diameter of the second light-transmitting hole 1031 is the diameter of an inscribed circle of the second light-transmitting hole 1031.

In other embodiments, the second light-transmitting hole 1031 is a blind hole defined at a center or other position of the second connecting member 103. In some further embodiments, the second light-transmitting hole 1031 may be a light-transmitting area flush with the third surface 1033 and the fourth surface 1034, without being limited herein.

In at least one embodiment, a ratio of a maximum outer diameter of the second connecting member 103 to an inner aperture diameter of the second light-transmitting hole 1031 ranges from 2:1 to 30:1.

When the second connecting member 103 is of a non-circular shape such as a square, a polygon, etc., the maximum outer diameter refers to a length of a diagonal of the second connecting member 103. When the second connecting member 103 is a circular shape, the maximum outer diameter refers to the diameter of the second connecting member 103. It will be understood that the maximum outer diameter of the second connecting member 103 does not refer to the maximum achievable outer diameter value of the second connecting member 103, but rather that there may be more than one outer diameter values of the second connecting member 103 when the second connecting member 103 is in a particular shape, for example, when the second connecting member 103 is in a rectangle shape with an aspect ratio of 16:9, the outer diameters of the second connecting member 103 are different in different positions, and the maximum outer diameter of the second connecting member 103 refers to a largest outer diameter among that plurality of outer diameter values. The inner aperture diameter of the second light-transmitting hole 1031 is generally a diameter of the second light-transmitting hole 1031. When the second light-transmitting hole 1031 is a non-circular hole, the inner aperture diameter of the second light-transmitting hole 1031 is a diameter of an inscribed circle of the second light-transmitting hole 1031.

In at least one embodiment, a ratio of the inner aperture diameter of the second light-transmitting hole 1021 and a diameter of a head of the camera lens of the imaging module 101 ranges from 1:1-3:1.

The imaging module 101 can include a plurality of camera lens arranged along a light axis of the imaging module 101. The diameter of the head of the camera lens of the imaging module 101 refers to a maximum diameter of the camera lens that is closest to the incident side of the imaging module 101, and the camera lens of the plurality of camera lenses that is closest to the incident side of the imaging module 101 is generally also the camera lens of the plurality of camera lenses which has a largest diameter.

Therefore, by the above limitation of the ratio range, it can be ensured that, the diameter of the second light-transmitting hole 1031 is sufficiently large so that the imaging module 101 is able to capture its entire field-of-view area through the second light-transmitting hole 1031 without being obscured by the second connecting member 103, and the imaging module 101 can be avoided from being cropped or distorted in its imaging.

In some embodiments, the maximum outer diameter of the second connecting member 103 is less than or equal to the maximum outer diameter of the imaging module 101. When the imaging module 101 is a non-circular shape such as a square, polygon, etc., the maximum outer diameter refers to a length of a diagonal of the imaging module 101. When the imaging module 101 is a circular shape, the maximum outer diameter is a diameter of the imaging module 101. It will be understood that the maximum outer diameter of the imaging module 101 does not refer to the maximum achievable outer diameter value of the imaging module 101, but rather that there may be a plurality of outer diameter values of the imaging module 101 when it is in a particular shape, e.g., when the imaging module 101 is a rectangular shape with an aspect ratio of 16:9, the outer diameters of the imaging module 101 are different in different positions, and the maximum outer diameter of the imaging module 101 refers to the largest outer diameter among that plurality of outer diameter values.

Therefore, the maximum outer diameter of the second connecting member 103 is less than or equal to the maximum outer diameter of the imaging module 101, which can improve the aesthetics of the second connecting member 103.

The second light-transmitting hole 1031 is a through hole defined at a center of the second connecting member 103.

In at least one embodiment, the second light-transmitting hole 1031 is a circular hole. In other embodiments, the second light-transmitting hole 1031 may be a square hole or a polygonal hole, etc., without limitation herein. When the second light-transmitting hole 1031 is a square hole or a polygonal hole, the inner aperture diameter of the second light-transmitting hole 1031 refers to a diameter of an inscribed circle of the second light-transmitting hole 1031.

In some embodiments, as shown in FIG. 9, a second extending portion 1032 is provided at the inner or outer edge of the second connecting member 103.

Therefore, the second extending portion 1032 can be provided as a manual tearing bit, by means of which the second extending portion 1032, the second connecting member 103 can be conveniently attached to one side of the imaging module 101 towards the first connecting member 102.

In some embodiments, the second extending portion 1032 is in a shape of square. In other embodiments, the second extending portion 1032 is in a shape of a sharp corner provided at an inner edge of the second connection member 103.

In some embodiments, where the second connecting member 103 is in a shape of square, the second connecting member 103 has a length and width of 55±5 mm, respectively, and the second light-transmitting hole 1031 has an inner aperture diameter of 37±5 mm. The second extending portion 1032 has a length and width of 5±2 mm. The second connecting member 103 has a thickness of 0.8±0.5 mm.

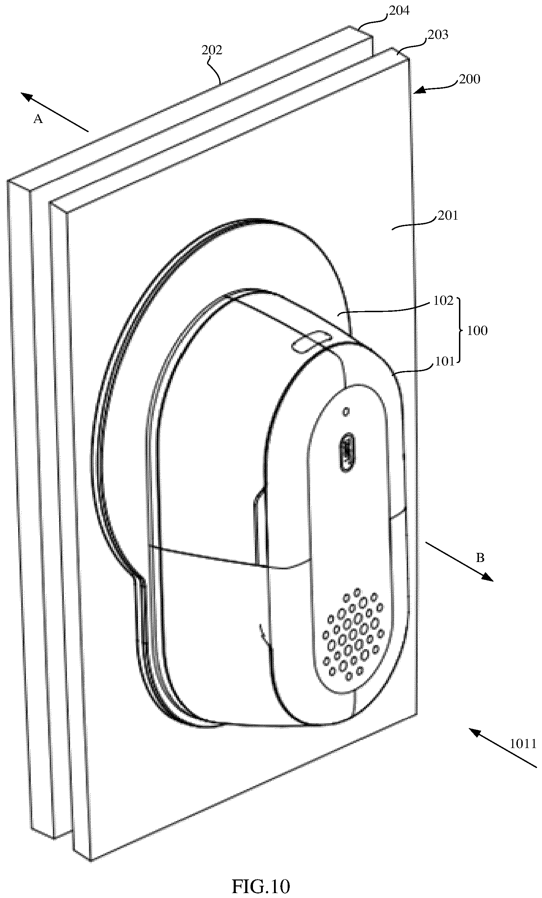

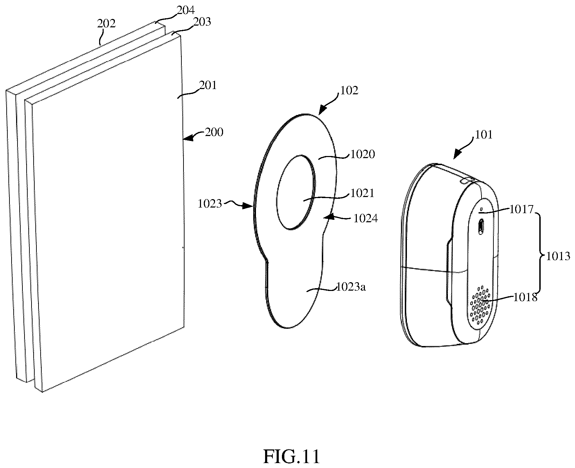

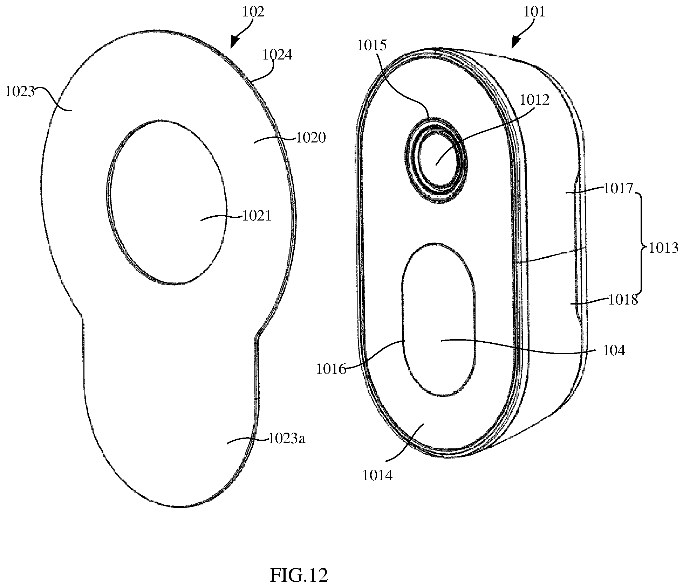

Referring to FIGs. 10-12, FIG. 10 illustrates a schematic view of a three-dimensional structure of a camera assembly 100 mounted on a light-transmitting substrate 200 in accordance with another embodiment of the present disclosure; FIG. 11 illustrates an exploded view of FIG. 10 in accordance with another embodiment of the present disclosure; FIG. 12 illustrates a schematic view of a structure of the camera assembly 100 of FIG. 11.

As shown in FIGs. 10-12, the imaging module 101 further comprises a magnetic member 104 and a camera lens 1012; the first connecting member 102 comprises a magnetic portion 1023a. The magnetic portion 1023a is connected to the light shielding portion 1020. One side of the first connecting member 102 is connected to the light-transmitting substrate 200, the other side of the first connecting member 102 is connected to the imaging module 101 by the magnetic portion 1023a absorbing the magnetic member 104 of the imaging module 101.

Therefore, the other side of the first connecting member 102 is connected to the imaging module 101 by the magnetic portion 1023a absorbing the magnetic member 104 of the imaging module 101, facilitating disassembly and installation as well as positional adjustment between the imaging module 101 and the first connecting member 102.

In at least one embodiment, the imaging module 101 may be in a waist shape.

In at least one embodiment, at least one of the two, the magnetic portion 1023a and the magnetic member 104, is a magnet, and the other may be a magnet made of permanent magnet materials or a magnetizable member made of soft magnetic materials (e.g., silicon steel, iron), etc.

In at least one embodiment, the magnetic portion 1023a is a magnet or a magnetizable member, and the region of the first connecting member 102 except the magnetic portion 1023a is a non-magnetic region, i.e., the magnetic portion 1023a and the light shielding portion 1020 are made of different materials. In other embodiments, the first connecting member 102 as a whole may be a magnet or a magnetizable member, i.e., both the magnetic portion 1023a and the light shielding portion 1020 are magnets or magnetizable members.

In some embodiments, the first connecting member 102 is a one-piece structure, i.e., the light shielding portion 1020 and the magnetic portion 1023a are provided in one piece. In other embodiments, the light shielding portion 1020 and the magnetic portion 1023a may be of a split structure and assembled together, without limitation herein.

In this embodiment, the first connecting member 102 is a magnetizable member such as a black iron sheet, and a part of the black iron sheet is hollowed out to form the first light-transmitting hole 1021, and the area surrounding the first light-transmitting hole 1021 is a light shielding portion 1020, and the area connected to the outer peripheral edge of the light shielding portion 1020 is the magnetic portion 1023a. It is to be understood that the light shielding portion 1020 and the magnetic part 1023a are named only from the perspective of their functions. In fact, the magnetic portion 1023a may have a light shielding function, and the magnetic portion 1023a may be magnetized or may itself be a magnet, and is not limited herein. The magnetic member 104 is a magnet. In some other embodiments, the first connecting member 102 as a whole is a magnet.

In yet other embodiments, the first connecting member 102 as a whole is made of a light-blocking fleece or the like, and the magnetic portion 1023a is a magnetizable member or a magnet, which may be fixed to one side of the first connecting member 102 proximate to the light-transmitting substrate 200 and provided in a position corresponding to the position of the magnetic member 104, or fixed to one side of the first connecting member 102 proximate to the imaging module 101 and provided in a position corresponding to the position of the magnetic member 104, or may be wrapped in the light shielding fleece and provided at a position corresponding to the magnetic member 104, or the like. That is, the light shielding portion 1020 may extend to a region where the magnetic portion 1023a overlaps and be provided at least partially overlapping with the magnetic portion 1023a.

In at least one embodiment, the imaging module 101 further includes a housing 1013 and an end cover 1014, the camera lens 1012 is fixed in the housing 1013, the end cover 1014 is connected to the housing 1013 and covers an opening of the housing 1013; the end cover 1014 defines a third light-transmitting hole 1015, the third light-transmitting hole 1015 is located corresponding to the first light-transmitting hole 1021, the magnetic member 104 is fixed to the end cover 1014 except an area of the third light-transmitting hole 1015.

Therefore, the camera lens 1012 and the magnetic member 104 can be located at different positions of the end cover 1014, which can avoid positional interference between the magnetic member 104 and the camera lens 1012, and also reduce the distance between the magnetic member 104 and the magnetic portion 1023a, and improve the reliability of the magnetic adsorption connection.

In at least one embodiment, the end cover 1014 defines a recess 1016. The recess 1016 and the third light-transmitting hole 1015 are spaced apart, and the magnetic member 104 is fixed in the recess 1016.

In this way, the magnetic member 104 is located within the end cover 1014, which can further shorten the distance between the magnetic member 104 and the magnetic portion 1023a, and the thickness of the magnetic member 104 matches the thickness of the end cover 1014 without additionally increasing the thickness of the end cover 1014, improving the compactness of the imaging module 101.

In other embodiments, the magnetic member 104 may be fixed to an inner surface or an outer surface of the end cover 1014, or fixed to the housing 1013, or fixed to the end cover 1014 and/or the housing 1013 via an intermediate element, or even fixed to the camera lens 1012 via an intermediate element, etc., without limitation herein.

In at least one embodiment, the second surface 1024 of the first connecting member 102 is attached to the end cover 1014 by the magnetic portion 1023a absorbing the magnetic member 104.

In at least one embodiment, as shown in FIGs. 10-12, when the housing 1013 is enclosed only the camera lens 1012, the housing 1013 may be circular or square in shape. However, in this embodiment, the camera lens 1012 and the magnetic member 104 are provided side by side in a spaced apart manner, and therefore, the housing 1013 is designed to be waist-shaped in order to enclose both the camera lens 1012 and the magnetic member 104, i.e., the housing 1013 includes a first housing portion 1017 and a second housing portion 1018, where the first housing portion 1017 is adjacent to the camera lens 1012 and the second housing portion 1018 is adjacent to the magnetic member 104. The second housing portion 1018 is adjacent to the magnetic member 104. Of course, the light shielding portion 1020 only needs to block the light rays around the camera lens 1012, and therefore, the light shielding portion 1020 extends out of the first housing portion 1017 a predetermined distance along the radial direction of the camera lens 1012, where the radial direction of the camera lens 1012 refers to a direction radiating in a dispersion-like manner in all directions with the center of the camera lens 1012 as a round point.

It will be understood that the camera lens 1012 and the magnetic member 104 may also be spaced side by side, at which point the housing 1013 may be adaptively designed to be transversely waisted, without limitation herein.

In at least one some embodiment, an outer peripheral edge of the magnetic member 104 does not extend beyond an outer peripheral edge of the second housing portion 1018.

Therefore, the cost of materials used for the first connecting member 102 can be reduced, among other things. In other embodiments, the outer peripheral edge of the magnetic portion 1023a may extend beyond the outer peripheral edge of the second housing portion 1018 by a predetermined distance, which may increase aesthetics to a certain extent.

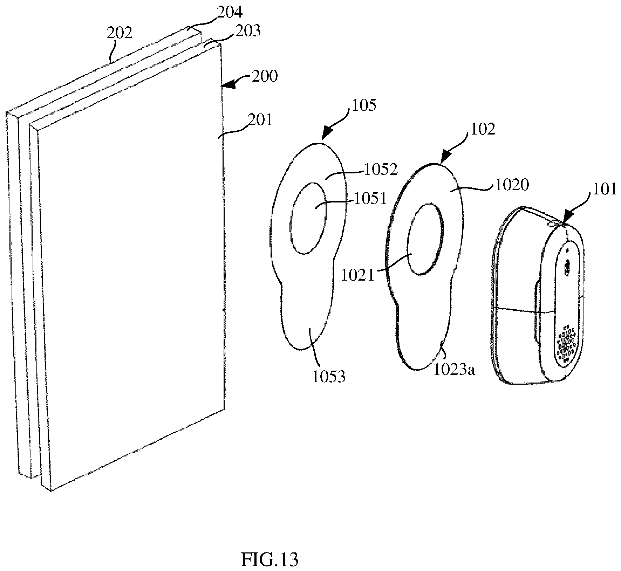

Referring to FIG. 13, the camera assembly 100 further includes a fourth connecting member 105, the fourth connecting member 105 is bonded between the light-transmitting substrate 200 and the first connecting member 102.

Therefore, the first connecting member 102 and the light-transmitting substrate 200 can be bonded to each other.

In at least one some embodiment, the fourth connecting member 105 has the same shape and dimensions as the first connecting member 102. For example, the fourth connecting member 105 defines a fourth light-transmitting hole 1051, a wraparound portion 1052 around the fourth light-transmitting hole 1051, and a protruding portion 1053 that is also connected to the wraparound portion 1052, where the fourth light-transmitting hole 1051 corresponds to the position of the first light-transmitting hole 1021 for transmitting light. The wraparound portion 1052 is used to bond the light shielding portion 1020 to the first light-transmitting substrate 203. The protruding portion 1053 is used to bond the magnetic portion 1023a to the first light-transmitting substrate 203. In other embodiments, the fourth connecting member 105 may be dispersed in a multi-point distribution with the first surface 1023 of the first connecting member 102, without limited herein.

It is to be understood that the above are only examples, and adjustments may be made as needed in actual applications, and are not limited herein.

The above technical solutions to the subject matter of the present disclosure and the corresponding details are introduced, it can be understood that the above introduction is only some of the embodiments of the subject matter of the technical solutions of the present disclosure, and some of the details can be omitted in its specific implementation.

In addition, in some embodiments of the above present disclosure, there are multiple embodiments of the combination of implementation possibilities, various combination programs are limited to space will not be listed. The technical personnel in the field can freely combine the implementation of the above embodiments according to the needs of the specific implementation, in order to obtain a better application experience.

In summary, it can be seen that this application has the above mentioned excellent characteristics, so that it can be configured to enhance the effectiveness of the previous technology has not been practical, and become a very practical value of the product.

The above is only a better example of this application, and is not intended to limit this application. Any modification, equivalent replacement or improvement made within the ideas and principles of this application shall be included in the scope of protection of this application.

## Claims

1. A camera assembly (100), configured to be mounted on a light-transmitting substrate (200), the light-transmitting substrate comprising a first side (201) and a second side (202) opposite to the first side; wherein the camera assembly comprises an imaging module (101) and a first connecting member (102); the first connecting member is connected between the imaging module and the first side of the light-transmitting substrate; the first connecting member defines a first light-transmitting hole (1021) and comprises a light shielding portion (1020); the first light-transmitting hole is located corresponding to a camera lens of the imaging module; the light shielding portion is set around the first light-transmitting hole; the light shielding portion is protruded from a peripheral surface of the imaging module along a radial direction of the imaging module; the imaging module is configured to image a scene on the second side of the light-transmitting substrate through the first light-transmitting hole; a side of the imaging module back from the first connecting member is a third side (1011); the light shielding portion is configured to block light rays entering the light-transmitting substrate from the third side and then entering the imaging module after reflection from the light-transmitting substrate.

2. The camera assembly according to claim 1, wherein a ring of a projection of the peripheral surface of the imaging module on the light-transmitting substrate is located within a projection of the light shielding portion of the first connecting member on the light-transmitting substrate, or, a ring of a projection of the peripheral surface of the imaging module on the light-transmitting substrate coincides with an inner edge of a projection of the light shielding portion of the first connecting member on the light-transmitting substrate.

3. The camera assembly according to claim 1, wherein a ratio of a maximum outer diameter of the light shielding portion to an inner aperture diameter of the first light-transmitting hole ranges from 2:1 to 30:1.

4. The camera assembly according to claim 1, wherein a ratio of an inner aperture diameter of the first light-transmitting hole and a diameter of a head of a camera lens of the imaging module ranges from 1:1-3:1.

5. The camera assembly according to claim 1, wherein an inner aperture diameter of the first light-transmitting hole is greater than or equal to a diameter of a largest area of the imaging module that can be imaged on a surface of the first connecting member that is back from the imaging module.

6. The camera assembly according to claim 1, wherein the light shielding portion is an inscribed rectangle or an inscribed polygon of a circle having a maximum outer diameter of the light shielding portion as a diameter.

7. The camera assembly according to claim 1, wherein a first extending portion (1022) is provided at an outer edge of the light-shielding portion; and/or, when the imaging module is externally square in shape, the light-shielding portion is an inscribed rectangle of a circle having an maximum outer diameter as a diameter, and outer edge of the light-shielding portion has four top corners, where the first extending portion is provided at one of the four top corners, and chamfered corners are provided at the other three top corners, respectively.

8. The camera assembly according to claim 1, wherein the camera assembly further comprises a second connecting member (103), one surface of the first connecting member is connected to the first light-transmitting substrate; one surface of the second connecting member is connected to the imaging module; the first connecting member and the second connecting member are removably connected on sides towards to each other.

9. The camera assembly according to claim 8, wherein the first connecting member is a suede velcro; and the second connecting member is a hook velcro.

10. The camera assembly according to claim 8, wherein the second connecting member defines a second light-transmitting hole (1031); the imaging module images a scene on the second side of the light-transmitting substrate through the second light-transmitting hole and the first light-transmitting hole; a ratio of a maximum outer diameter of the second connecting member to an inner aperture diameter of the second light-transmitting hole ranges from 2:1 to 30:1; and/or, a ratio of an inner aperture diameter of the second light-transmitting hole and a diameter of a head of a camera lens of the imaging module ranges from 1:1-3:1.

11. The camera assembly according to claim 10, wherein an inner aperture diameter of the second light-transmitting hole is greater than or equal to an inner aperture diameter of the first light-transmitting hole; and/or, an maximum outer diameter of the second connecting member is less than or equal to an maximum outer diameter of the imaging module; and/or,
wherein a second extending portion (1032) is provided at an inner edge or an outer edge of the second connecting member; and/or, the second extending portion is in a shape of a sharp corner or a square shape.

12. The camera assembly according to claim 1, wherein the imaging module further comprises a magnetic member (104) and a camera lens (1012); the first connecting member comprises a magnetic portion (1023a);
wherein one side of the first connecting member is connected to the light-transmitting substrate, the other side of the first connecting member is connected to the imaging module by the magnetic portion absorbing the magnetic member of the imaging module.

13. The camera assembly according to claim 12, wherein the light shielding portion is made of non-magnetic materials and the magnetic portion is made of magnetizable materials; or, both the light shielding portion and the magnetic portion are made of magnetizable materials; and/or wherein one of the magnetic portion and the magnetic member is made of permanent magnetic materials, and the other of the magnetic portion and the magnetic member is made of soft magnetic materials; or, both the magnetic portion and the magnetic member are made of permanent magnetic materials.

14. The camera assembly according to claim 12, wherein the imaging module further comprises a housing (1013) and an end cover (1014), the camera lens is fixed in the housing, the end cover is connected to the housing and covers an opening of the housing; the end cover defines a third light-transmitting hole (1015), the third light-transmitting hole is located corresponding to the first light-transmitting hole, the magnetic member is fixed to the end cover except an area of the third light-transmitting hole.

15. The camera assembly according to claim 14, wherein the camera lens and the magnetic member are arranged separately, the housing comprises a first housing portion (1017) and a second housing portion (1018), the first housing portion is located adjacent to the camera lens, the second hosing portion is located adjacent to the magnetic member; the light shielding portion is protruded from a peripheral surface of the first housing portion along a radial direction of the camera lens.
